# EUROPÄISCHE PATENTANMELDUNG

(11) **EP 4 331 959 A1**
(43) Veröffentlichungstag der Anmeldung: **06.03.2024**
(21) Anmeldenummer: 22193615.6
(22) Anmeldetag: 02.09.2022
(51) Int. Cl.: B62D 53/08

(54) **DREHGESTELL**

(71) Anmelder: EPSILON Kran GmbH., 5020 Salzburg (AT)
(72) Erfinder: ROHRMOSER, Florian, 5611 Grossarl (AT); HETZ, Johannes, 5431 Kuchl (AT); WAGENHOFER, Daniel, 5441 Abtenau (AT)
(74) Vertreter: Torggler & Hofmann Patentanwälte - Innsbruck

(57) **Zusammenfassung**

Drehgestell (7) mit einem Drehgestellrahmen (70) für ein Fahrwerk, mit einer Radaufhängung mit zumindest einem Längslenker (8), wobei der Drehgestellrahmen (70)
- zumindest eine erste Lagervorrichtung (1) für einen Fahrzeugaufbau (32)
- zumindest eine zweite Lagervorrichtung (2) für zumindest einen Längslenker (8)
- zumindest eine dritte Lagervorrichtung (3) für eine Zuggabel (9) zur Verbindung des Drehgestells (7) mit einem Zugfahrzeug
aufweist, wobei die zumindest eine zweite Lagervorrichtung (2) für zumindest einen Längslenker (8) und die zumindest eine dritte Lagervorrichtung (3) für eine Zuggabel (9) an zumindest einem einstückig aus einem Blech gefertigten Teil (10, 15) des Drehgestellrahmens (70) ausgebildet sind.

## Beschreibung

Die vorliengende Erfindung betrifft ein Drehgestell gemäß dem Oberbegriff des Anspruchs 1 sowie einen Anhänger mit einem solchen Drehgestell.

Im Stand der Technik sind Drehgestelle bekannt, welche einen Drehgestellrahmen für die Montage eines Fahrwerks, eines Fahrzeugaufbaus und einer Zuggabel zur Anbindung an ein Zugfahrzeug aufweisen. Der Drehgestellrahmen, das Fahrwerk und die Zuggabel sind gewöhnlich als eigenständige Baugruppen gefertigt und werden zur Ausbildung eines Drehgestells zusammengefügt. Der Drehgestellrahmen weist gewöhnlich eine Konstruktion aus Querträgern und Längsträgern auf. Ein Lagerblock der Zuggabel, welche gewöhnlich schwenkbar am Drehgestellrahmen gelagert ist, kann an den Drehgestellrahmen angeschweißt werden. Das Fahrwerk umfasst gewöhnlich zumindest einen schwenkbar gelagerten Längslenker zur Anbindung und Führung der Achse des Fahrwerks an den Drehgestellrahmen. Die Anbindung des schwenkbar gelagerten Längslenkers am Drehgestellrahmen erfolgt gewöhnlich durch einen eigens am Drehgestellrahmen angeschweißten Lagerblock. Eine Lagerung eines Fahrzeugaufbaus, beispielsweise ein Drehkranz, wird gewöhnlich auf einem mit schmalen Querträgern und/oder Längsträgern, beispielweise I-Träger Profile, zusammengefügten Rechteckgestell verschraubt. Durch das Zusammenfügen einzelner Querträger und/oder Längsträger zu einem Rechteckgestell und durch die Anordnung der Längslenker und der Zuggabel an eigens dafür vorgesehenen Lagerböcken ergeben sich mehrere Nachteile.

Schweißverbindungen erhöhen die benötigte Fertigungsdauer und stellen potentielle Fehlerstellen dar. Letzteres fällt insbesondere bei Betrachtung des Kraftflusses von der Zuggabel zur Achse des Fahrwerks negativ auf, da dieser über zusammengefügte Bauteile des Drehgestells verläuft. Zudem ergibt sich durch die Lagerböcke eine Erhöhung des Gewichts des Drehgestells.

Da Zugmaschinen heckseitig eine gewisse Bodenfreiheit zum Befahren einer Steigung aus der Ebene heraus benötigen - gewöhnlich durch die Angabe eines Böschungswinkels oder eines Überhangwinkels quantifiziert - wird eine Kupplung für eine Zuggabel eines gezogenen Drehgestells gewöhnlich so hoch wie möglich am Rahmen des Zugfahrzeugs angeordnet. Da eine Zuggabel zur Anbindung eines Drehgestells an ein Zugfahrzeugs in Verwendung zur vorteilhaften Kraftübertragung im Wesentlichen horizontal verlaufen muss, ist eine Lagerung der Zuggabel am Drehgestell entsprechend hoch über dem Boden angeordnet. Werden für die Lagerung der Zuggabel und der Längslenker gemeinsame Lagerstellen auf einer gemeinsamen Achse verwendet, ist das Lager der Längslenker entsprechend hoch gelegen. Dies hat wiederum negative Auswirkungen auf das Verhalten des Fahrwerks, da eine Krafteinleitung bei Vertikalstößen auf die Achse zu Längskraftelementen im Längslenker führen kann, welche zu einer nachteilig erhöhten Belastung der Zuggabel und der Lagerstellen sowie einem ungünstigen Fahrverhalten des Drehgestells und somit schlechtem Fahrkomfort in der Zugmaschine führen.

Aufgabe der Erfindung ist es, ein gegenüber dem Stand der Technik verbessertes Drehgestell anzugeben, bei welchem die eingangs genannten Nachteile nicht auftreten.

Die Aufgabe wird von Drehgestell mit den Merkmalen des Anspruchs 1 gelöst.

Vorteilhafte Ausführungen sind in den abhängigen Ansprüchen definiert.

Das Drehgestell weist einen Drehgestellrahmen für ein Fahrwerk mit an einer Achse gelagerten Rädern zum Befahren einer Fahrbahn oder eines Bodens auf. Das Fahrwerk selbst weist eine Radaufhängung mit zumindest einem Längslenker auf, wobei der Längslenker schwenkbar am Drehgestellrahmen gelagert sein kann und der Längslenker zur Anbindung und Führung der Achse des Fahrwerks am Drehgestellrahmen dienen kann.

Der Drehgestellrahmen weist weiter zumindest eine erste Lagervorrichtung für einen Fahrzeugaufbau auf. Durch die erste Lagervorrichtung kann ein Fahrzeugaufbau gelenkig mit dem Drehgestell verbunden werden. Diese erste Lagervorrichtung kann durch einen Drehkranz, insbesondere einen Kugeldrehkranz ausgebildet sein. Vorzugsweise kann der Drehkranz auf einem Deckblech des Drehgestellrahmens befestigbar sein.

Ein Fahrzeugaufbau kann über die erste Lagervorrichtung an das Drehgestell ankoppelbar sein oder über die erste Lagervorrichtung mit dem Drehgestell kraftschlüssig verbunden sein.

Für die Lagerung des zumindest einen Längslenkers weist der Drehgestellrahmen zumindest eine zweite Lagervorrichtung auf. Wie bereits erwähnt kann der zumindest eine Längslenker mit der zweiten Lagervorrichtung schwenkbar am Drehgestellrahmen lagerbar sein. Eine Schwenkachse des zumindest einen Längslenkers kann im Wesentlichen horizontal und quer zu einer Längsachse des Drehgestells liegen.

Für die Lagerung einer Zuggabel zur Verbindung des Drehgestells mit einem Zugfahrzeug weist der Drehgestellrahmen zumindest eine dritte Lagervorrichtung auf. Die Zuggabel kann mit der dritten Lagervorrichtung schwenkbar am Drehgestellrahmen lagerbar sein. Eine Schwenkachse der Zuggabel kann im Wesentlichen horizontal und quer zu einer Längsachse des Drehgestells liegen.

Es ist vorteilhaft vorgesehen, dass die zumindest eine zweite Lagervorrichtung für zumindest einen Längslenker und die zumindest eine dritte Lagervorrichtung für eine Zuggabel an zumindest einem einstückig aus einem Blech gefertigten Teil des Drehgestellrahmens ausgebildet sind.

Die Ausbildung an einem an zumindest einem einstückig aus einem Blech gefertigten Teil des Drehgestellrahmens ermöglicht einen vorteilhaften Kraftfluss von der Zuggabel zur Achse des Fahrwerks, da dieser über zumindest ein fügefreies Bauteil des Drehgestellrahmens verläuft.

Als ein Blech kann ein Erzeugnis aus Metall verstanden werden, das flächig ausgeführt ist und dessen Breite und Länge sehr viel größer als seine Dicke sind.

Die Ausbildung an zumindest einem einstückig aus einem Blech gefertigten Teil des Drehgestellrahmens ermöglicht die Ausbildung der zumindest einen zweiten Lagervorrichtung und der zumindest einen dritten Lagervorrichtung im Drehgestellrahmen. Vom Drehgestellrahmen gesondert ausgebildete Lagerböcke, welche mit dem Drehgestellrahmen schweißtechnisch verbunden werden müssen, können so entfallen.

Da die zumindest eine zweite Lagervorrichtung für zumindest einen Längslenker und die zumindest eine dritte Lagervorrichtung für eine Zuggabel an zumindest einem einstückig aus einem Blech gefertigten Teil des Drehgestellrahmens ausgebildet sind, kann der am Drehgestellrahmen verfügbare Bauraum, insbesondere im Wesentlichen die gesamte vertikale Erstreckung des Drehgestellrahmens, für die Anordnung der zweiten Lagervorrichtung und der dritten Lagervorrichtung genutzt werden.

Die zumindest eine zweite Lagervorrichtung und die zumindest eine dritte Lagervorrichtung können in einer vorteilhaften Ausführung an dem zumindest einen einstückig aus einem Blech gefertigten Teil des Drehgestellrahmens entlang einer vertikalen Achse des Drehgestells voneinander beabstandet ausgebildet sein. Insbesondere kann die zumindest eine dritte Lagevorrichtung im Wesentlichen stirnseitig an einer Oberseite des Drehgestellrahmens an dem zumindest einen einstückig aus einem Blech gefertigten Teil ausgebildet werden und die zumindest eine zweite Lagevorrichtung entlang einer vertikalen Achse des Drehgestells unterhalb der zumindest einen dritten Lagevorrichtung ausgebildet werden. Die zumindest eine zweite Lagevorrichtung kann im Wesentlichen auf Höhe der Achse des Fahrwerks, an dem zumindest einen einstückig aus einem Blech gefertigten Teil ausgebildet werden.

Der Drehgestellrahmen kann zumindest einen einstückig aus einem Blech gefertigten Langsteg und zumindest ein einem Langsteg gegenüber angeordnetes einstückig aus einem Blech gefertigtes Flügelblech aufweisen. Der zumindest eine einstückig aus einem Blech gefertigte Langsteg kann einen Längsträger des Drehgestellrahmens ausbilden.

Der zumindest eine einstückig aus einem Blech gefertigte Langsteg und das zumindest eine aus einem Blech gefertigte Flügelblech können über ein Deckbleck des Drehgestellrahmens miteinander verbunden sein. Eine Verbindung kann durch Verschweißen der Bleche erfolgen.

Die zumindest eine zweite Lagervorrichtung für den zumindest einen Längslenker und die zumindest eine dritte Lagervorrichtung für die Zuggabel können in gegenüberliegenden Öffnungen, insbesondere Paaren von Öffnungen, in dem Langsteg und dem Flügelblech ausgebildet sein. Die zweite und die dritte Lagervorrichtung können Lagerbuchsen umfassen, welche in den gegenüberliegenden Öffnungen, insbesondere den Paaren von Öffnungen, anordenbar sind.

Der zumindest eine Längslenker und die zumindest eine Lagerstelle der Zuggabel können zwischen einem Langsteg und einem Flügelblech am Drehgestellrahmen lagerbar sein.

Das zumindest eine Flügelblech kann
- außenliegend am Drehgestellrahmen angeordnet sein, und/oder
- eine kürzere Längserstreckung aufweisen als der Langsteg, und/oder
- aus einem Blech mit geringer Stärke als der Langsteg ausgebildet sein, und/oder
- einen gekröpften Verlauf mit zumindest einer Abkantung aufweisen.

Ein gekröpfter Verlauf mit zumindest einer Abkantung des zumindest einen Flügelblechs kann unterschiedliche Abstände der gegenüberliegenden Öffnungen ermöglichen.

Das zumindest eine Flügelblech kann eine vierte Lagervorrichtung für eine Höhenfixierung einer Zuggabel aufweisen. Mit einer Höhenfixierung, welche beispielsweise als längenveränderbare Stange ausgebildet sein kann, kann zwischen der Zuggabel und dem Flügelblech eine Haltekraft aufgebracht werden, mit der eine schwenkbar am Drehgestellrahmen gelagerte Zuggabel in einer Schwenkstellung fixierbar sein kann.

Der zumindest eine Langsteg und das zumindest eine Flügelblech können mit einem Querträger verbunden sein, wobei vorzugsweise der Querträger eine C-förmige Querschnittsform aufweist. Vorteilhaft ist der Querträger einstückig aus einem Blech, vorzugsweise einem C-förmig oder L-förmig abgekanteten Blech, gefertigt. Eine Verbindung kann durch Verschweißen der Bleche erfolgen.

In einer vorteilhaften Ausführung kann der Drehgestellrahmen zwei Langstege mit zwei Flügelblechen und einen Querträger aufweisen, wobei die Langstege und die Flügelbleche mit dem Querträger verbunden sind.

Innenliegend am Drehgestellrahmen können an zumindest einem Langsteg quer zu einer Längsrichtung des Drehgestells abstehende Laschen zur Aufnahme eines in Längsrichtung des Drehgestells verlaufenden Bolzen zur Anbindung eines Fangseils des Fahrwerks angeordnet sein. Ein Fangseil kann zur Begrenzung der Bewegbarkeit der Achse des Fahrwerks relativ zum Drehgestellrahmen vorgesehen sein, beispielsweise um eine unkontrolliertes Ausfedern des Fahrwerks zu verhindern. Durch eine Anordnung der Laschen am Langsteg und ein in Längsrichtung des Drehgestells verlaufender Bolzen können auf ein Fangseil einwirkende Kräfte in den Längssteg einleiten.

Der Drehgestellrahmen kann eine einstückig aus einem Blech gefertigte Balgauflage für zumindest einen Luftbalg einer Federung des Fahrwerks aufweisen, wobei vorzugsweise die Balgauflage an einer Unterseite des zumindest einen Langstegs angeordnet ist. Dadurch können bei Vertikalstößen auf die Achse auftretende Kräfte in den Drehgestellrahmen eingeleitet werden.

Die Balgauflage kann vorteilhaft entlang einer vertikalen Achse des Drehgestellrahmens auf das Fahrwerk abgestimmt, beispielsweise oberhalb der zweiten Lagevorrichtung, und unterhalb des Deckbleches von der dritten Lagevorrichtung bestimmend beabstandet sein.

Der Drehgestellrahmen kann zumindest eine fünfte Lagervorrichtung für einen Stoßdämpfer des Fahrwerks und zumindest eine sechste Lagervorrichtung für einen Stabilisator des Fahrwerks aufweisen.

Ein Stoßdämpfer kann zur Dämpfung von den durch den Längslenker geführten Bewegungen der Achse relativ zum Drehgestellrahmen vorgesehen sein. Die Anbindung des Stoßdämpfers erfolgt gewöhnlich durch Anschweißen eines eigenen Lagerbolzens mit einem freien Ende, auf welchen Biegekräfte einwirken und diese in den Drehgestellrahmen übertragen werden können.

Der Drehgestellrahmen kann vorteilhaft zumindest ein gegenüber dem Langsteg angeordnetes einstückig aus einem Blech gefertigtes Anbindungsblech aufweisen, wobei zumindest eine fünfte Lagervorrichtung und die zumindest eine sechste Lagervorrichtung an gegenüberliegenden Öffnungen in dem Langsteg und dem Anbindungsblech ausgebildet sind.

Eine Ausführung des Drehgestellrahmens, bei welcher eine fünfte Lagervorrichtung für einen Stoßdämpfer des Fahrwerks und gegebenenfalls eine sechste Lagervorrichtung für einen Stabilisator des Fahrwerks in Öffnungen des Langstegs und des Flügelblechs ausgebildet sind, ist ebenso denkbar

Das zumindest eine Anbindungsblech kann innenliegend im Drehgestellrahmen angeordnet sein.

Der Drehgestellrahmen kann vorteilhaft ein einstückig aus einem Blech gefertigtes Deckblech aufweisen, wobei vorteilhaft der zumindest eine Langsteg und das zumindest eine Flügelblech an einer Unterseite des Deckblechs angeordnet sind und über das Deckblech miteinander verbunden sind, vorzugsweise über eine Schweißverbindung.

Der Drehgestellrahmen kann in einer vorteilhaften Ausführung
- jeweils an den Längsseiten eine Anordnung mit einem einstückig aus Blech gefertigten Langsteg, einem einstückig aus Blech gefertigten Flügelblech und einem einstückig aus Blech gefertigten Anbindungsblech,
- an einer Vorderseite einen Querträger mit C-förmigem oder L-förmigen Querschnitt, und
- an der Oberseite ein einstückig aus Blech gefertigtes Deckblech
aufweisen.

Das einstückig aus einem Blech gefertigte Deckblech kann einen abgekanteten Bereich zur Montage eines Druckluftspeichers einer Luftfederung des Fahrwerks aufweisen, wobei der abgekantete Bereich rückseitig am Drehgestellrahmen ausgebildet sein kann.

Das einstückig aus einem Blech gefertigte Deckblech kann zumindest einen Anschlagpunkt für eine Federvorrichtung einer Rückhaltevorrichtung einer Zuggabel aufweisen. Mit einer Rückhaltevorrichtung kann zumindest eine Schwenkstellung der Zuggabel relativ zum Drehgestellrahmen federnd gehalten werden. Der zumindest eine Anschlagpunkt für eine Federvorrichtung kann in Form einer Öffnung des aus einem Blech gefertigten Deckblech ausgebildet sein.

Die zumindest eine erste Lagervorrichtung für einen Fahrzeugaufbau kann durch einen Drehkranz ausgebildet sein, wobei vorzugsweise der Drehkranz auf einem Deckblech des Drehgestellrahmens befestigbar ist.

Schutz wird auch begehrt für einen Anhänger mit einem Fahrzeugaufbau und einem wie zuvor beschriebenen Drehgestell. Der Fahrzeugaufbau, auf welchen eine Last geladen werden kann, kann über die erste Lagervorrichtung mit dem Drehgestellrahmen verbunden sein. Der Anhänger kann in Form eines Holzanhängers mit einem Rungenaufbau zum Transport von Baumstämmen ausgebildet sein.

Ausführungsbeispiele der Erfindung werden anhand der Figuren diskutiert. Es zeigen:
Fig. 1a bis 1c unterschiedliche Ansichten eines Drehgestells mit einem Drehgestellrahmen gemäß einer ersten Ausführung
Fig. 2a bis 2f unterschiedliche Ansichten einer ersten Ausführung eines Drehgestellrahmens
Fig. 3a und 3b unterschiedliche Ansichten einer zweiten Ausführung eines Drehgestellrahmens
Fig. 4 einen Anhänger mit einem Drehgestell und einem Fahrzeugaufbau

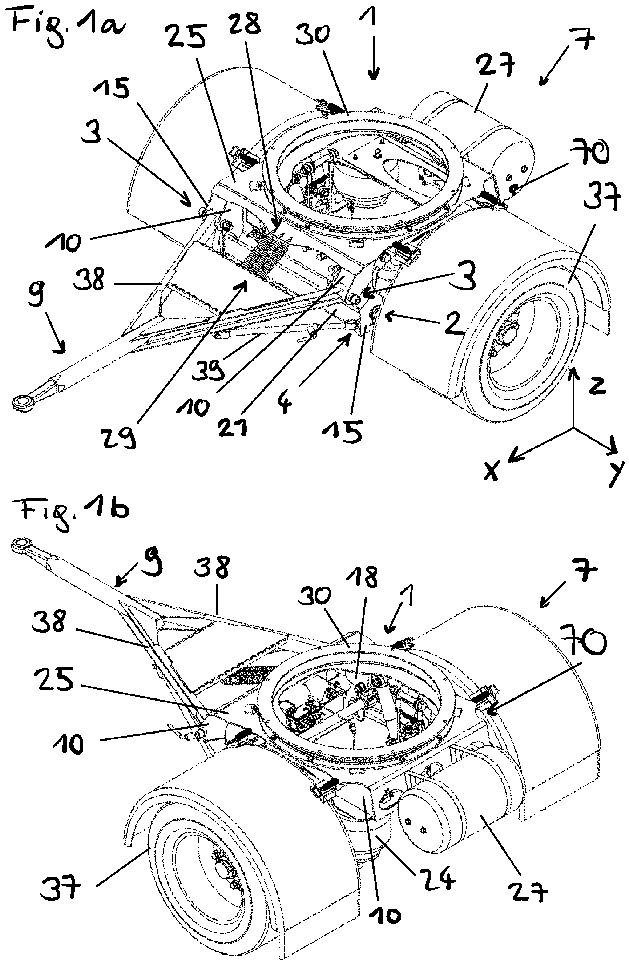

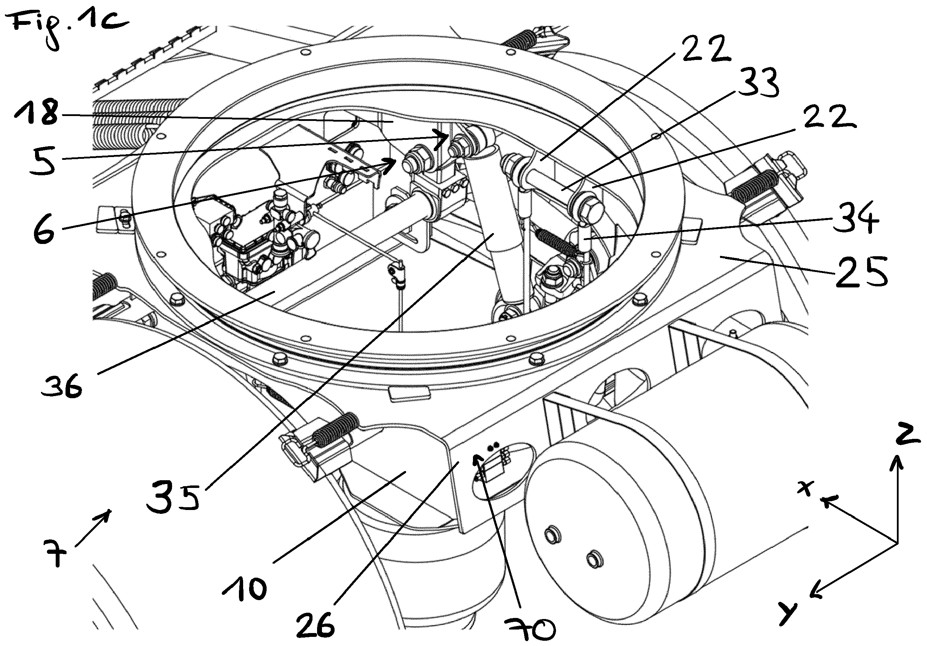

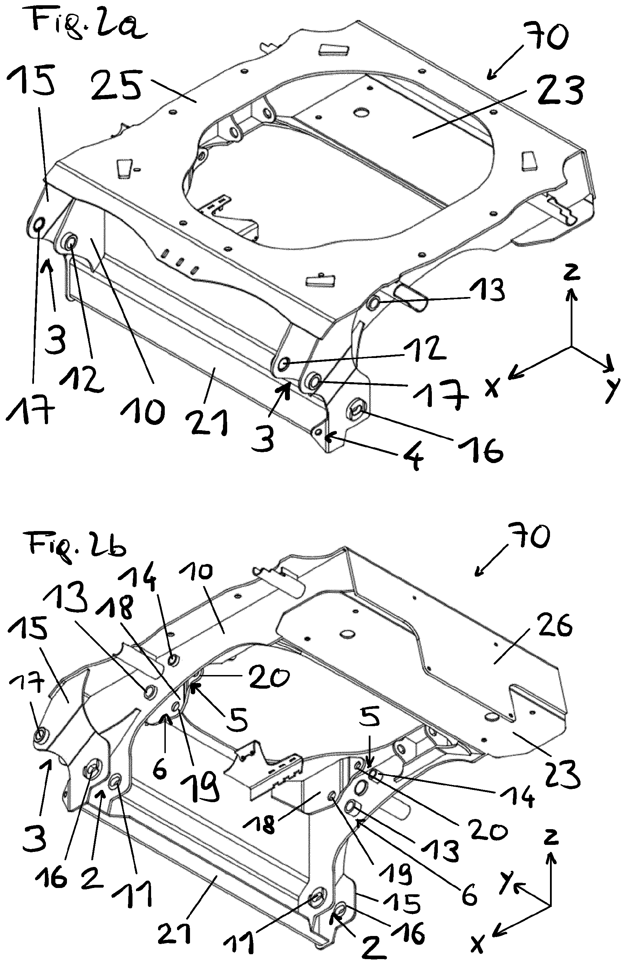

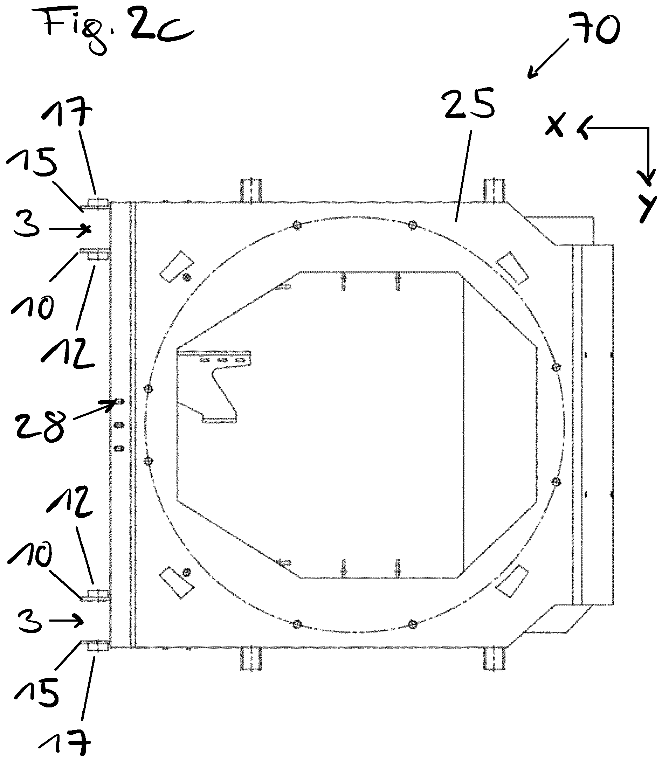

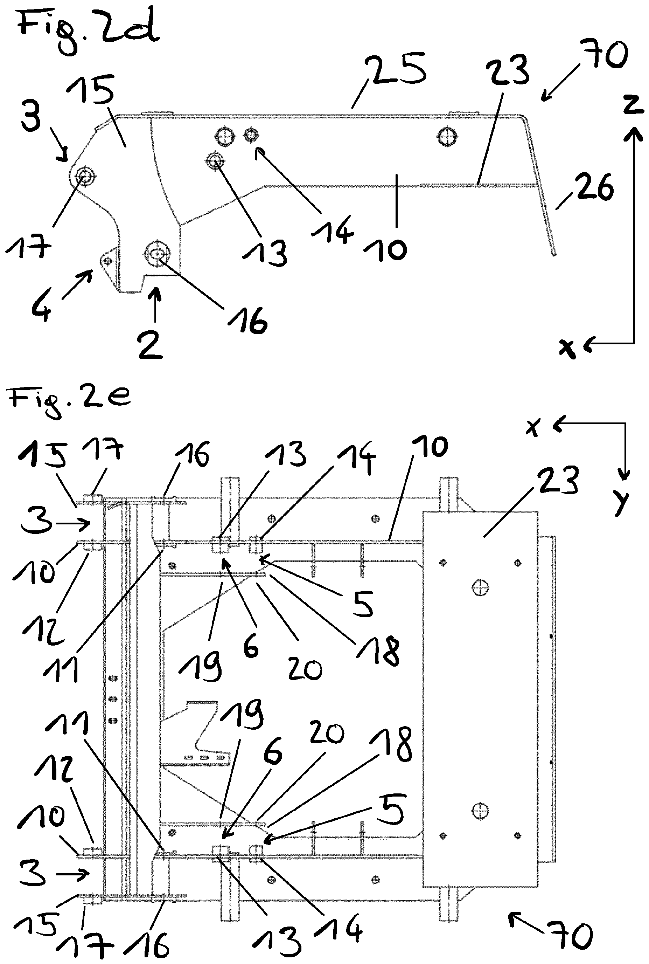

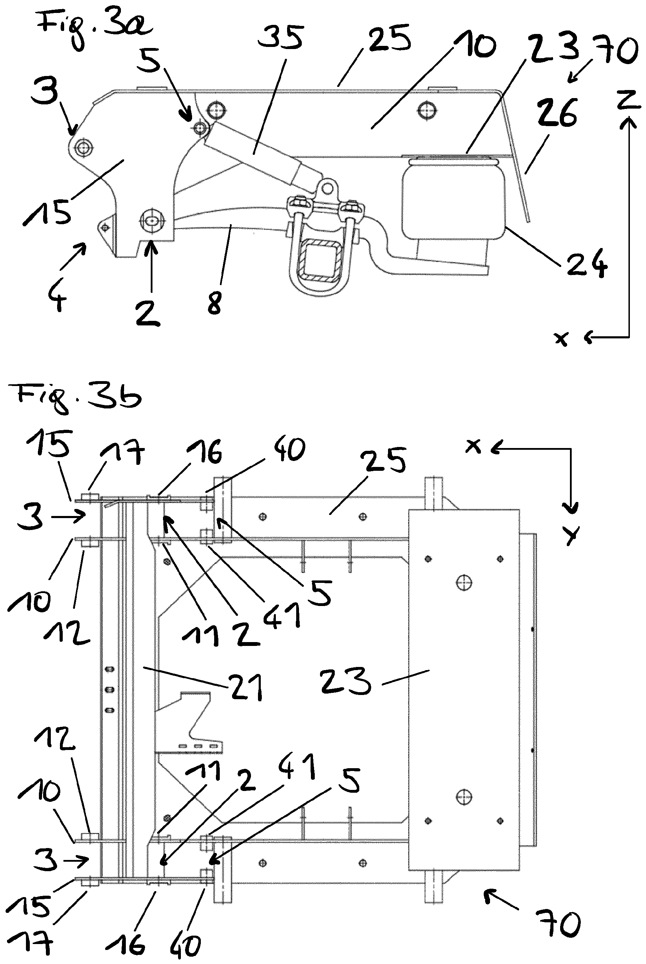

In den Figuren 1a und 1b sind unterschiedliche perspektivische Ansichten eines Drehgestells 7 gezeigt. Figur 1c zeigt eine Detailansicht eines Innenbereichs der Drehgestellrahmens 70 des Drehgestells 7. In den Figuren 2a bis 2f sind unterschiedliche Ansichten eines Drehgestellrahmens 70 gemäß einer ersten Ausführung gezeigt. In den Figuren 3a und 3b sind unterschiedliche Ansichten eines Drehgestellrahmens 70 gemäß einer zweiten Ausführung gezeigt, wobei sich die Ausführungen im Wesentlichen in der Anbindung von Teilen des Fahrwerks unterscheiden.

Das in den Figuren 1a und 1b gezeigte Drehgestell 7 weist einen Drehgestellrahmen 70 für ein einachsiges Fahrwerk mit Rädern 37, beispielhaft ausgeführt als Starrachse, auf, welche mit einer Radaufhängung mit jeweils einem Längslenker 8 für jedes der Räder 37 am Drehgestellrahmen 70 montiert sind. Zur Ankopplung an ein Zugfahrzeug weist das Drehgestell 7 eine Zuggabel 9 auf, welche eine Y-Form mit zwei auseinanderlaufenden Schenkeln 38 aufweist und schwenkbar am Drehgestellrahmen 70 befestigt ist. Das einstückig aus einem Blech gefertigte Deckblech 25 des Drehgestellrahmens 70 kann wie dargestellt zumindest einen Anschlagpunkt 28 für eine Federvorrichtung 29 einer Rückhaltevorrichtung der Zuggabel 9 aufweisen.

Wie den Figuren 1a bis 1c und 2a bis 2f zu entnehmen ist, kann der Drehgestellrahmen 70 in der ersten Ausführung zwei Seitenteile aus jeweils einem Langsteg 10, einem außenliegend angeordneten Flügelblech 15 und einem innenliegen angeordneten Anbindungsblech 18, einen vorderseitig angeordneten C-förmig oder L-förmig abgekanteten Querträger 21 und ein einstückig aus einem Blech gefertigtes Deckblech 25 mit einem rückseitig abgekanteten Bereich 26 aufweisen. Der Langsteg 10, das Flügelblech 15 und das Anbindungsblech 18 sind jeweils an einer Unterseite des Deckblechs 25 angeordnet und sind über das Deckblech 25 miteinander verbunden. Der Langsteg 10 und Flügelblech 15 sind jeweils mit dem Querträger 21 verbunden. An dem abgekanteten Bereich 26 kann rückseitig am Drehgestellrahmen 70 ein Druckluftspeicher 27 einer Luftfederung des Fahrwerks montiert werden.

Das Drehgestell 7 kann in der ersten Ausführung des Drehgestellrahmens 70 die folgenden Lagervorrichtungen aufweisen:
- eine erste Lagervorrichtung 1 für einen Fahrzeugaufbau 32
- zwei zweite Lagervorrichtungen 2 für einen Längslenker 8
- zwei dritte Lagervorrichtungen 3 für eine Zuggabel 9
- eine vierte Lagervorrichtung 4 für eine Höhenfixierung 39 einer Zuggabel 9
- zwei fünfte Lagervorrichtungen 5 für Stoßdämpfer 35 des Fahrwerks
- zwei sechste Lagervorrichtungen 6 für einen Stabilisator 36 des Fahrwerks

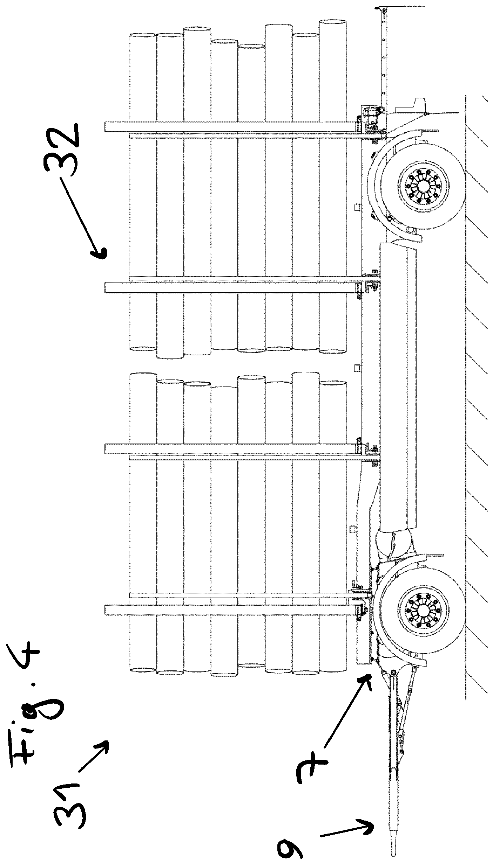

Die erste Lagervorrichtung 1 für einen Fahrzeugaufbau 32 (siehe dazu Figur 4) ist in Form des Drehkranzes 30 ausgebildet, welcher auf dem aus einem einstückigen Blech gefertigten Deckblech 25 des Drehgestellrahmens 70 über eine Schraubverbindung befestigt ist.

Die zweite Lagervorrichtung zur schwenkbaren Lagerung des Längslenkers 8 ist in Paaren von Öffnungen 11, 16 im Langsteg 10 und dem Flügelblech 15 ausgebildet.

Die dritte Lagervorrichtung 3 für die schwenkbare Lagerung der Zuggabel 9 in Paaren von Öffnungen 12, 17 im Langsteg 10 und dem Flügelblech 15 ausgebildet.

Die vierte Lagervorrichtung 4 für die Höhenfixierung 39 ist in einer Öffnung eines Flügelblechs 15 ausgebildet.

Die fünfte Lagervorrichtung 5 für die schwenkbare Lagerung des Stoßdämpfers 35 am Drehgestellrahmen 70 ist in Paaren von Öffnungen 14, 20 im Langsteg 10 und dem Anbindungsblech 18 ausgebildet.

Die sechste Lagervorrichtung 6 für die schwenkbare Lagerung des Stabilisators 35 ist am Drehgestellrahmen 70 in Paaren von Öffnungen 13, 19 im Langsteg 10 und dem Anbindungsblech 18 ausgebildet.

Die Lagervorrichtungen 1, 2, 3, 4, 5, 6 sind an einstückig aus einem Blech gefertigten Teilen 10, 15, 18, 25 des Drehgestellrahmens 70 ausgebildet.

Insbesondere sind die zweite und dritte Lagervorrichtungen 2, 3 an jeweils einem einstückig aus einem Blech gefertigten Langsteg 10 und einem dem Langsteg 10 gegenüber angeordneten einstückig aus einem Blech gefertigten Flügelblech 15 ausgebildet, wobei die zweite Lagervorrichtung 2 und die dritte Lagervorrichtung 3 jeweils in gegenüberliegenden Öffnungen 11, 12, 16, 17 in dem Langsteg 10 und dem Flügelblech 15 ausgebildet sind.

Analog dazu sind in der ersten Ausführung des Drehgestells 7 die fünfte Lagervorrichtung 5 und die sechste Lagervorrichtung 6 an jeweils einem einstückig aus einem Blech gefertigten Langsteg 10 und einem dem Langsteg 10 gegenüber angeordneten einstückig aus einem Blech gefertigten Anbindungsblech 18 ausgebildet, wobei die fünfte Lagervorrichtung 5 und die sechste Lagervorrichtung 6 an gegenüberliegenden Öffnungen 13, 14, 19, 20 in dem Langsteg 10 und dem Anbindungsblech 18 ausgebildet sind.

Speziell in Figur 2d ist erkennbar, dass die zweite und die dritte Lagervorrichtung 2, 3 an dem Langsteg 10 und dem Flügelblech 15 des Drehgestellrahmens 70 entlang einer vertikalen Achse z des Drehgestells 1 voneinander beabstandet ausgebildet sind.

Wie der Detailansicht der Figur 1c zu entnehmen ist, sind innenliegend am Drehgestellrahmen 70 an zumindest einem Langsteg 10 quer entlang der Querachse y des Drehgestells 1 abstehende Laschen 22 zur Aufnahme eines entlang der Längsachse x des Drehgestells 7 verlaufenden in Bolzens 33 zur Anbindung eines Fangseils 34 des Fahrwerks angeordnet.

Zur Anordnung zumindest eines Luftbalgs 24 einer Federung des Fahrwerks weist der Drehgestellrahmen 70 eine einstückig aus einem Blech gefertigte Balgauflage 23 auf, wobei die Balgauflage 23 an einer Unterseite des zumindest einen Langstegs 10 angeordnet ist (siehe dazu auch Figur 3a).

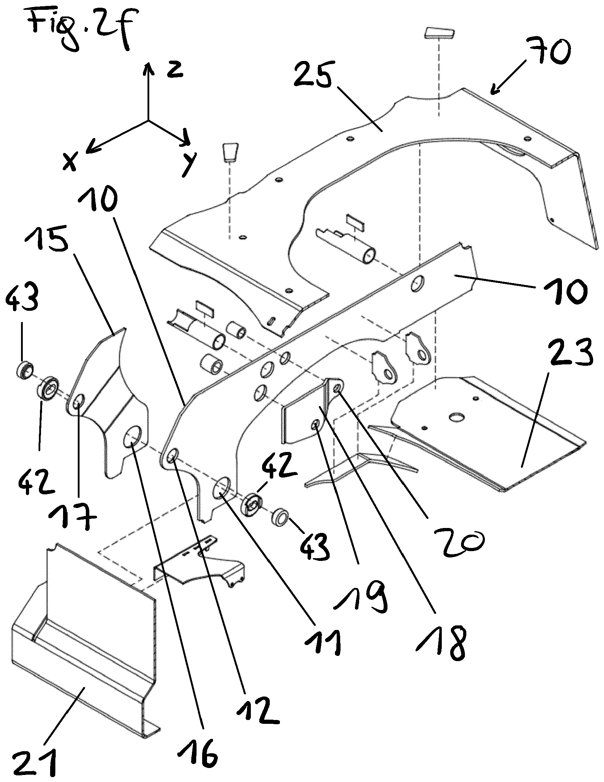

In Figur 2f ist eine Explosionsdarstellung eines Seitenbereichs des Drehgestellrahmens 70 gezeigt. Die zweite und die dritte Lagervorrichtung 2, 3 können wie dargestellt Lagerbuchsen 43, 44 umfassen, welche in den gegenüberliegenden Öffnungen11, 12, 16, 17 anordenbar sind.

Die in den Figuren 3a und 3b dargestellte zweite Ausführung des Drehgestellrahmens 70 unterscheidet sich von der in den Figuren 2a bis 2f dargestellten ersten Ausführung im Wesentlichen in der Ausbildung der fünften Lagervorrichtung 5.

In der zweiten Ausführung kann der Drehgestellrahmen 70 zwei Seitenteile aus jeweils einem Langsteg 10 und einem außenliegend angeordneten Flügelblech 15, einen vorderseitig angeordneten C-förmig abgekanteten Querträger 21 und ein einstückig aus einem Blech gefertigtes Deckblech 25 mit einem rückseitig abgekanteten Bereich 26 aufweisen. Der Langsteg 10 und das Flügelblech 15 sind jeweils an einer Unterseite des Deckblechs 25 angeordnet und sind über das Deckblech 25 miteinander verbunden. Der Langsteg 10 und Flügelblech 15 sind jeweils mit dem Querträger 21 verbunden. An dem abgekanteten Bereich 26 kann rückseitig am Drehgestellrahmen 70 ein Druckluftspeicher 27 einer Luftfederung des Fahrwerks montiert werden.

Ein Drehgestell 7 kann mit der zweiten Ausführung des Drehgestellrahmens 70 die folgenden Lagervorrichtungen aufweisen:
- eine erste Lagevorrichtung 1 für einen Fahrzeugaufbau 32 (hier nicht dargestellt, aber analog zur ersten Ausführung ausführbar)
- zwei zweite Lagervorrichtungen 2 für einen Längslenker 8
- zwei dritte Lagervorrichtungen 3 für eine Zuggabel 9
- eine vierte Lagervorrichtung 4 für eine Höhenfixierung 39 einer Zuggabel 9
- zwei fünfte Lagervorrichtungen 5 für Stoßdämpfer 35 des Fahrwerks

Die erste, die zweite, die dritte und die vierte Lagervorrichtung 1, 2, 3, 4 können analog zur ersten Ausführung des Drehgestellrahmen 70 ausgeführt sein.

Die fünfte Lagervorrichtung 5 für den Stoßdämpfer 35 kann in dieser Ausführung ebenfalls in Paaren von Öffnungen 41, 40 im Langsteg 10 und dem Flügelblech 15 ausgebildet sein.

Eine solche Ausführung des Drehgestellrahmens 70 sowie des Fahrwerks kann insbesondere
- bei großen Spurweiten und/oder
- bei großen Abständen von Längslenkern des Fahrwerks in Querrichtung, und/oder
- bei Einzelbereifung
gegeben sein und ohne einen Stabilisator auskommen.

Die Lagervorrichtungen 1, 2, 3, 4, 5 sind an einstückig aus einem Blech gefertigten Teilen 10, 15, 25 des Drehgestellrahmens 70 ausgebildet.

Insbesondere sind die zweite, dritte und fünfte Lagervorrichtungen 2, 3, 5 an jeweils einem einstückig aus einem Blech gefertigten Langsteg 10 und einem dem Langsteg 10 gegenüber angeordneten einstückig aus einem Blech gefertigten Flügelblech 15 ausgebildet.

In Figur 3a ist erkennbar, dass die zweite und die dritte Lagervorrichtung 2, 3 an dem Langsteg 10 und dem Flügelblech 15 des Drehgestellrahmens 70 entlang einer vertikalen Achse z des Drehgestells 1 voneinander beabstandet ausgebildet sind.

Figur 4 zeigt eine Ausführung eines Anhängers 31 in Form eines zur Ladung von Baumstämmen geeigneten Holzanhängers mit einem Fahrzeugaufbau 32 mit einem Rungenaufbau und einem Drehgestell 7.

### Bezugszeichenliste

- 1: erste Lagervorrichtung
- 2: zweite Lagervorrichtung
- 3: dritte Lagervorrichtung
- 4: vierte Lagervorrichtung
- 5: fünfte Lagervorrichtung
- 6: sechste Lagervorrichtung
- 7: Drehgestell
- 8: Längslenker
- 9: Zuggabel
- 10: Langsteg
- 11: Öffnung Langsteg
- 12: Öffnung Langsteg
- 13: Öffnung Langsteg
- 14: Öffnung Langsteg
- 15: Flügelblech
- 16: Öffnung Flügelblech
- 17: Öffnung Flügelblech
- 18: Anbindungsblech
- 19: Öffnung Anbindungsblech
- 20: Öffnung Anbindungsblech
- 21: Querträger
- 22: Laschen
- 23: Balgauflage
- 24: Luftbalg
- 25: Deckblech
- 26: abgekanteten Bereich
- 27: Druckluftspeicher
- 28: Anschlagpunkt
- 29: Federvorrichtung
- 30: Drehkranz
- 31: Anhänger
- 32: Fahrzeugaufbau
- 33: Bolzen
- 34: Fangseil
- 35: Stoßdämpfer
- 36: Stabilisator
- 37: Rad
- 38: Schenkel
- 39: Höhenfixierung
- 40: Öffnung
- 41: Öffnung
- 42: Lagerbuchse
- 43: Lagerbuchse
- 70: Drehgestellrahmen
- x: Längsachse
- y: Querachse
- z: vertikale Achse

## Patentansprüche

1. Drehgestell (7) mit einem Drehgestellrahmen (70) für ein Fahrwerk, mit einer Radaufhängung mit zumindest einem Längslenker (8), wobei der Drehgestellrahmen (70)
- zumindest eine erste Lagervorrichtung (1) für einen Fahrzeugaufbau (32)
- zumindest eine zweite Lagervorrichtung (2) für zumindest einen Längslenker (8)
- zumindest eine dritte Lagervorrichtung (3) für eine Zuggabel (9) zur Verbindung des Drehgestells (7) mit einem Zugfahrzeug
aufweist, **dadurch gekennzeichnet, dass** die zumindest eine zweite Lagervorrichtung (2) für zumindest einen Längslenker (8) und die zumindest eine dritte Lagervorrichtung (3) für eine Zuggabel (9) an zumindest einem einstückig aus einem Blech gefertigten Teil (10, 15) des Drehgestellrahmens (70) ausgebildet sind.

2. Drehgestell nach dem vorangehenden Anspruch, wobei die zumindest eine zweite und die zumindest eine dritte Lagervorrichtung (2, 3) an dem zumindest einen einstückig aus einem Blech gefertigten Teil (10, 15) des Drehgestellrahmens (70) entlang einer vertikalen Achse (z) des Drehgestells (1) voneinander beabstandet ausgebildet sind.

3. Drehgestell nach einem der vorangehenden Ansprüche, wobei der Drehgestellrahmen (70) zumindest einen einstückig aus einem Blech gefertigten Langsteg (10) und zumindest ein einem Langsteg (10) gegenüber angeordnetes einstückig aus einem Blech gefertigtes Flügelblech (15) aufweist, wobei die zumindest eine zweite Lagervorrichtung (2) für zumindest eine Längslenker (8) und die zumindest eine dritte Lagervorrichtung (3) für eine Zuggabel (9) in gegenüberliegenden Öffnungen (11, 12, 16, 17), insbesondere Paaren von Öffnungen, in dem Langsteg (10) und dem Flügelblech (15) ausgebildet sind.

4. Drehgestell nach dem vorangehenden Anspruch, wobei das zumindest eine Flügelblech (15) außenliegend am Drehgestellrahmen (70) angeordnet ist.

5. Drehgestell nach einem der beiden vorangehenden Ansprüche, wobei zumindest ein Flügelblech (15) eine vierte Lagervorrichtung (4) für eine Höhenfixierung (39) einer Zuggabel (9) aufweist.

6. Drehgestell nach einem der Ansprüche 3 bis 5, wobei der zumindest eine Langsteg (10) und das zumindest eine Flügelblech (15) mit einem Querträger (21) verbunden sind, wobei vorzugsweise der Querträger (21) eine C-förmige oder L-förmige Querschnittsform aufweist.

7. Drehgestell nach einem der Ansprüche 3 bis 6, wobei innenliegend am Drehgestellrahmen (70) an zumindest einem Langsteg (10) quer zu einer Längsrichtung des Drehgestells (1) abstehende Laschen (22) zur Aufnahme eines in Längsrichtung des Drehgestells (7) verlaufenden Bolzen (33) zur Anbindung eines Fangseils (34) des Fahrwerks aufweist.

8. Drehgestell nach einem der Ansprüche 3 bis 7, wobei der Drehgestellrahmen (70) eine einstückig aus einem Blech gefertigte Balgauflage (23) für zumindest einen Luftbalg (24) einer Federung des Fahrwerks aufweist, wobei vorzugsweise die Balgauflage (23) an einer Unterseite des zumindest einen Langstegs (10) angeordnet ist.

9. Drehgestell nach einem der Ansprüche 3 bis 8, wobei der Drehgestellrahmen (70)
- zumindest eine fünfte Lagervorrichtung (5) für einen Stoßdämpfer (35) des Fahrwerks
- zumindest eine sechste Lagervorrichtung (6) für einen Stabilisator (36) des Fahrwerks aufweist
wobei der Drehgestellrahmen (70) zumindest ein gegenüber dem Langsteg (10) angeordnetes einstückig aus einem Blech gefertigtes Anbindungsblech (18) aufweist und die zumindest eine fünfte Lagervorrichtung (5) und die zumindest eine sechste Lagervorrichtung (6) an gegenüberliegenden Öffnungen (13, 14, 19, 20) in dem Langsteg (10) und dem Anbindungsblech (18) ausgebildet sind.

10. Drehgestell nach dem vorangehenden Anspruch, wobei das zumindest eine Anbindungsblech (18) innenliegend im Drehgestellrahmen (70) angeordnet ist.

11. Drehgestell nach einem der Ansprüche 3 bis 10, wobei der Drehgestellrahmen (70) ein einstückig aus einem Blech gefertigtes Deckblech (25) aufweist und der zumindest eine Langsteg (10) und das zumindest eine Flügelblech (15) an einer Unterseite des Deckblechs (25) angeordnet sind und über das Deckblech (25) miteinander verbunden sind, vorzugsweise über eine Schweißverbindung.

12. Drehgestell nach dem vorangehenden Anspruch, wobei das einstückig aus einem Blech gefertigte Deckblech (25) einen abgekanteten Bereich (26) zur Montage eines Druckluftspeichers (27) einer Luftfederung des Fahrwerks aufweist.

13. Drehgestell nach einem der beiden vorangehenden Ansprüche, wobei das einstückig aus einem Blech gefertigte Deckblech zumindest einen Anschlagpunkt (28) für eine Federvorrichtung (29) einer Rückhaltevorrichtung einer Zuggabel (9) aufweist.

14. Drehgestell nach einem der vorangehenden Ansprüche, wobei die zumindest eine erste Lagervorrichtung (1) für einen Fahrzeugaufbau durch einen Drehkranz (30) ausgebildet ist, wobei vorzugsweise der Drehkranz (30) auf einem Deckblech (25) des Drehgestellrahmens (70) befestigbar ist.

15. Anhänger (31) mit einem Fahrzeugaufbau (32) und einem Drehgestell (7) nach einem der vorangehenden Ansprüche.
